**Europäisches Patentamt**

**European Patent Office**

**Office européen des brevets**

(19)

(11) Veröffentlichungsnummer : **0 030 344**

**B2**

(12)

# NEUE EUROPÄISCHE PATENTSCHRIFT

(45) Veröffentlichungstag der neuen Patentschrift : **13.04.88**

(51) Int. Cl.⁴ : **C 21 C   5/28**, C 21 C   5/56, **C 21 B  13/00**

(21) Anmeldenummer : **80107504.5**

(22) Anmeldetag : **01.12.80**

(54) **Verfahren zur Verbesserung der Wärmeausnutzung bei der Stahlerzeugung aus festen Eisenmaterialien.**

(30) Priorität : **11.12.79 DE 2949803**

(43) Veröffentlichungstag der Anmeldung :
**17.06.81 Patentblatt 81/24**

(45) Bekanntmachung des Hinweises auf die Patenterteilung : **05.10.83 Patentblatt 83/40**

(45) Bekanntmachung des Hinweises auf die Entscheidung über den Einspruch : **13.04.88 Patentblatt 88/15**

(84) Benannte Vertragsstaaten :
**AT BE FR GB IT LU NL SE**

(56) Entgegenhaltungen :
**DE-A- 2 719 981**
**DE-A- 2 729 983**
**DE-A- 2 816 543**
**DE-A- 2 838 983**
**DE-C- 2 438 142**
**FR-A- 1 231 179**
**GB-A-      7 625**
**GB-A- 2 011 477**

(73) Patentinhaber : **Klöckner CRA Technologie GmbH**
**Klöcknerstrasse 29**
**D-4100 Duisburg 1 (DE)**

(72) Erfinder : **von Bogdandy, Ludwig, Prof. Dr.-Ing.**
**Hirschkampstrasse 12**
**D-4200 Oberhausen-Sterkrade (DE)**
Erfinder : **Brotzmann, Karl, Dr.-Ing.**
**Fentscherstrasse 6**
**D-8458 Sulzbach-Rosenberg (DE)**

(74) Vertreter : **König, Reimar, Dr.-Ing.**
**Patentanwälte Dr.-Ing. Reimar König Dipl.-Ing. Klaus Bergen Wilhelm-Tell-Strasse 14 Postfach 260162**
**D-4000 Düsseldorf 1 (DE)**

EP 0 030 344 B2

## Beschreibung

Die Erfindung bezieht sich auf ein Verfahren zur Verbesserung der Wämeausnutzung bei der Stahlerzeugung aus festen Eisenmaterialien, wie z. B. Schrott oder vorreduzierten Eisenerzen (Eisenpellets, Eisenbriketts, Eisenschwamm) in einem Konverter, der Vorrichtungen zur Sauerstoffzufuhr oberhalb und unterhalb der Badoberfläche aufweist, sowie über Brennstoffeinleitungsdüsen im Stahlbadbereich verfügt.

Die Stahlerzeugung aus festen Einsatzstoffen ist im Konverter durch das Verfahren nach der deutschen Offenlegungsschrift 28 16 543 durchführbar. Die wesentlichen Merkmale dieser bekannten Erfindung bestehen darin, zunächst die in den Sauerstoffdurchblaskonverter chargierten, festen Eisenträger, hauptsächlich Schrott, vorzuheizen und dabei die im unteren Bereich des Konverters angeordneten Düsen als Öl- bzw. Gas/Sauerstoff-Brenner zu betreiben. Sobald sich eine Schmelze im Konverter befindet, wird mit kohlenstoffenthaltenden, pulverförmigen Brennstoffen, hauptsächlich Koksmehl und Sauerstoff, dem Bad Energie zugeführt.

Der in die Schmelze eingeleitete Kohlenstoff wird mit dem Sauerstoff zu CO verbrannt, und der wärmetechnische Wirkungsgrad, bezogen auf Vollverbrennung zu $CO_2$, beträgt ca. 17 %.

In dem Dokument GB-A-2 011 477 wird ein Weg aufgezeigt, den wärmetechnischen Wirkungsgrad des der Schmelze zugeführten Kohlenstoffs bis auf ca. 30 %, bezogen auf die Vollverbrennung, zu steigern. Das wesentliche Merkmal dieser Erfindung besteht darin, Sauerstoff unterhalb und oberhalb der Badoberfläche der Schmelze im Konverter zuzuführen. Es werden bis zu ca. 80 % der gesamten Sauerstoffmenge als Freistrahl auf das Bad geblasen, und damit kann man dem Bad Wärme aus der CO-Nachverbrennung zuführen. Die Anwendung dieser beiden Verfahren erlaubt es, in wirtschaftlicher Weise Stahl aus festen Eisenträgern im Konverter zu erzeugen. Bei dem betrieblichen Einsatz hat es sich jedoch gezeigt, daß zum Zeitpunkt, wenn erste Schmelze im Konverter gebildet wird, d. h. bei der Entstehung des Sumpfes aus ganz- oder teilweise aufgeschmolzenen Eisenträgern, die Wärmeausnutzung der zugeführten Brennstoffe stark schwankt und im allgemeinen niedriger als in anderen Phasen des Prozesses liegt. Der wärmetechnische Wirkungsgrad der zugeführten Brennstoffe ist in dieser Sumpfbildungsphase im Konverter sowohl beim Brennerbetrieb mit gasförmigen oder flüssigen Kohlenwasserstoffen als auch beim Einleiten fester, gemahlener, kohlenstoffhaltiger Brennstoffe ungünstig. Die hohe Wärmeausnutzung der gasförmigen oder flüssigen Kohlenwasserstoffe, wie sie sich beim reinen Vorheizen ergibt, stellt sich nicht mehr ein, da offenbar diese Brennstoffe zu einem großen Teil nur noch zu Kohlenmonoxid und Wasserstoff ohne fühlbaren Wärmegewinn umgewandelt werden, sobald sich geschmolzenes Eisen vor den Düsen befindet. Die staubförmige Kohle wird wahrscheinlich, solange keine ausreichende Badtiefe vorhanden ist, größtenteils durch den teilweise flüssigen Sumpf hindurchgeblasen und nicht von der Schmelze aufgenommen, wie es bei ausreichender Badtiefe der Fall ist.

Die vorliegende Erfindung hat es sich demgemäß zur Aufgabe gestellt, ein Verfahren der eingangs genannten Art zu schaffen, das die Nachteile der bekannten Verfahren vermeidet und insbesondere in der Phase, in der sich erste Schmelze bildet, d. h. bei Entstehung des Sumpfes im Konverter aus ganz- oder teilweise aufgeschmolzenen festen Eisenmaterialien, die Wärmeausnutzung der zugeführten Brennstoffe zu verbessern, um somit die Wirtschaftlichkeit des gesamten Prozesses zu steigern.

Gemäß der Erfindung wird diese Aufgabe dadurch gelöst, daß die Sauerstoff- und Brennstoffzufuhr nur durch mindestens zwei in unterschiedlichen Höhen in der Seitenwand des Konverters im Stahlbadbereich angeordnete Düsen in der Weise erfolgt, daß während der Vorheizzeit der festen Eisenmaterialien diese Düsen im Stahlbadbereich als Öl- und/oder Gas/Sauerstoff-Brenner betrieben werden, und nachdem die Schmelze die untere(n) Düse(n) erreicht hat, diese auf das Einblasen von pulverisierten, Kohlenstoffhaltigen Brennstoffen und Sauerstoff umgeschaltet werden und wenn die Schmelze die obere(n) Düse(n) erreicht hat, mit den Düsen im Stahlbadbereich Sauerstoff und mindestens zeitweise kohlenstoffhaltige Brennstoffe in die Schmelze eingeleitet werden.

Ein weiteres Merkmal der Erfindung besteht darin, vorwiegend mit Beginn der Sauerstoffzufuhr in die Schmelze unterhalb der Badoberfläche auch gleichzeitig Sauerstoff als Freistrahl auf die Schmelze zu blasen. Das Aufblasen von Sauerstoff kann entweder durch Düsen erfolgen, die im oberen Konverterteil eingebaut sind, oder es kann eine wassergekühlte Sauerstoffblaslanze angewendet werden.

Gemäß der Erfindung werden in Abhängigkeit von der Konvertergröße die unteren Düsen etwa 10 bis 50 cm und die darüberliegenden Düsen etwa 50 bis 150 cm oberhalb des düsenfreien Konverterbodens in der feuerfesten Ausmauerung der Konverterseitenwand eingebaut. Die Einbaulage ist ungefähr waagerecht und etwa unterhalb der Konverterdrehzapfen, bezogen auf die Konverterblasstellung. Unter Stahlbadbereich ist das Konvertervolumen zu verstehen, das in Frischstellung des Konverters von der fertiggefrischten Stahlschmelze eingenommen wird.

Weitere Ausgestaltungen der Erfindung gehen aus den Ansprüchen 3 und 4 hervor. Die Betriebsweise der Düsen im Stahlbadbereich gliedert sich nach dem erfindungsgemäßen Verfahren in drei Phasen.

In der ersten Phase, dem Vorheizen der in den Konverter chargierten Eisenmaterialien, beispielsweise Schrott, werden die Düsen in bekannter Weise als Brenner betrieben, und die heißen Verbrennungsgase durchströmen von unten nach oben das Schrotthaufwerk. Als Brennstoffe kommen beispielsweise Heizöl oder Erdgas zur Anwendung. Die flüssigen und/oder gasförmigen Brennstoffe werden mit Sauerstoff in ungefähr stöchiometrischem Verhältnis zu $CO_2$ und $H_2O$ verbrannt. Der Brennerbetrieb der Düsen in der unteren Einbauebene endet, sobald die Höhe des Sumpfes im Konverter die Düsenmündungen bedeckt.

Es folgt die zweite Phase der Düsenbetriebsweise, die Einschmelzphase. Die Düsen der unteren Einbauebene werden auf das Einblasen von kohlenstoffhaltigen Brennstoffen und Sauerstoff umgeschaltet. Die eingeleitete Sauerstoffmenge entspricht ungefähr dem zur CO-Verbrennung der eingeblasenen kohlenstoffhaltigen Brennstoffe erforderlichen Wert oder liegt geringfügig darüber. Die waagerechte Düsenanordnung bietet dabei den Vorteil, daß der zugeführte, pulverförmige Kohlenstoff nicht durch das Bad geblasen wird, sondern sich in der Schmelze löst und mit dem Sauerstoff unter Wärmegewinnung zu Kohlenmonoxid verbrennt. Die Düsen in der zweiten Einbauebene arbeiten in dieser Phase als Brenner weiter.

Werden auch ihre Austrittsöffnungen von der Schmelze erreicht, so folgt die dritte Phase der Düsenbetriebsweise. Diese Periode ist als Frischphase gekennzeichnet. Die Düsen in beiden Einbauebenen des Stahlbadbereiches dienen nun der Sauerstoffzufuhr und mindestens zeitweise zum Einleiten der kohlenstoffenthaltenden Brennstoffe, bis die Gesamtbrennstoffmenge der Schmelze zugeführt ist. Am Ende der Stahlherstellungsphase kann durch beide Düsengruppen nur noch Sauerstoff eingeleitet werden.

Im Stahlbadbereich verfügen die Düsen zum Schutz gegen vorzeitiges Zurückbrennen über eine Schutzmediummummantelung. Als Düsenschutzmedium kommen vorzugsweise Kohlenwasserstoffe zum Einsatz. Es hat sich aber bewährt als Düsenschutzmedium, insbesondere gegen Frischende zur Herabsetzung der Wasserstoffgehalte im Stahl, Stickstoff, Kohlendioxid und/oder Inertgas, beispielsweise Argon, einzusetzen.

Es liegt im Sinne der Erfindung, die sogenannten Ringschlitzdüsen nach dem deutschen Patent 24 38 142 im Stahlbadbereich anzuwenden. Die Ringschlitzdüsen haben den Vorteil, daß der aus ihnen austretende Gasstrahl eine beträchtlich kürzere Reichweite hat und man somit verhindert, daß durch den Gasstrahl die feuerfeste Auskleidung der gegenüberliegenden Seitenwand beschädigt wird. Im Zentrum der Ringschlitzdüse kann auch ein zusätzliches Einleitungsrohr angebracht sein, durch das die einzublasenden Stoffe, beispielsweise Kohlestaub oder Schlackenbildner, wie Kalk, der Schmelze zugeführt werden.

Gemäß der Erfindung erweist es sich als vorteilhaft, in der unteren Einbauebene in der Konverterseitenwand eine oder mehrere Ringschlitzdüsen, die sowohl der Zufuhr von pulverförmigen, kohlenstoffhaltigen Brennstoffen und Sauerstoff dient, zu verwenden. Man kann jedoch auch zwei übliche Düsen aus jeweils zwei konzentrischen Rohren verwenden. Eine dieser Düsen wird dann mit kohlenstoffhaltigen Brennstoffen und die andere mit Sauerstoff betrieben. Der Abstand zwischen den Düsenöffnungen dieser beiden Düsen soll nicht zu groß gewählt werden, beispielsweise ca. 50 cm, damit die zugeführten Reaktionspartner auch in dem noch nicht vollkommen aufgeschmolzenen Sumpf miteinander reagieren und Wärme an das Bad abgeben, wodurch der Sumpf schnell weiter aufgeschmolzen wird.

Gemäß einer weiteren Ausgestaltung der Erfindung hat sich auch die Kombination von Ringschlitzdüsen und üblichen Düsen aus zwei konzentrischen Rohren bewährt. Beispielsweise sind in einem 60 t-Konverter etwa 50 cm oberhalb des Konverterbodens gegenüberliegend zwei Ringschlitzdüsen angeordnet. Diese Ringschlitzdüsen betreibt man entsprechend der beschriebenen, dreiphasigen Verfahrensweise. Auf die Gesamtstahlerzeugungszeit im Konverter bezogen, bedeutet es, daß sie etwa in der ersten Hälfte als Brenner und in der zweiten Hälfte als Sauerstoffeinleitungsdüsen fungieren. Unterhalb einer der beiden Ringschlitzdüsen befinden sich etwa 10 cm über dem Boden zwei Düsen aus konzentrischen Rohren, im Abstand von 40 cm. Ungefähr während 1/4 der gesamten Stahlerzeugungszeit arbeiten diese Düsen als Brenner. Danach leitet man durch eine der Düsen staubförmigen Kohlenstoff und durch die andere Düse Sauerstoff. Zum Zeitpunkt, bei dem die Ringschlitzdüsen auf Sauerstoff umgeschaltet werden, führt man durch beide Doppelrohrdüsen pulverisierten Kohlenstoff der Schmelze zu. Ungefähr während der letzten 5 Minuten der Frischphase dienen alle vier Düsen der Sauerstoffzufuhr.

Während gemäß der Erfindung in einem 60 t-Konverter wie beschrieben die beiden Einbauebenen der Düsen im Stahlbadbereich bei 10 und 50 cm liegen, betragen die entsprechenden Einbauhöhen in einem 300 t-Konverter 15 und 120 cm.

Ein weiteres Merkmal der vorliegenden Erfindung besteht darin, die Bodenhöhe im Konverter ungefähr konstant zu halten. Zwar ist der Verschleiß der Bodenausmauerung bei Anwendung des erfindungsgemäßen Verfahrens sehr gering, da im Boden keine Düsen mehr eingebaut sind, doch sobald ein nennenswerter Verschleiß, beispielsweise in der Größenordnung von 5 bis 10 cm, auftritt, ist die alte Bodenhöhe durch Aufspritzen feuerfester Massen, Einsintern von feuerfesten Stoffen oder ggf. durch eine Einschlackpraxis auf die Ausgangsstärke aufzubauen, damit die Düsen im Stahlbadbereich ungefähr in der gleichen Höhe über dem Boden bleiben. Es kann auch zweckmäßig sein, im Laufe der Konverterreise die Stärke des Bodens etwas zu erhöhen, damit bei einem fortschreitenden Verschleiß der Konverterwandausmauerung ungefähr vergleichbare Mengen flüssiger Schmelze sich im Konverter befinden.

Nachfolgend wird die Erfindung anhand eines nichteinschränkenden Beispiels näher erläutert.

In einem Sauerstoffdurchblaskonverter mit der Stahlerzeugungskapazität von 60 t pro Charge, wird das erfindungsgemäße Verfahren angewendet. Der Konverter hat im neu ausgemauerten Zustand ein inneres Volumen von ca. 50 m³ bei einem lichten Durchmesser von 4.20 m im zylindrischen Teil und einer lichten Höhe von 4.90 m. Es sind, betrachtet bei senkrechter Konverterstellung, unterhalb der beiden Konverterdrehzapfen Seitenwanddüsen montiert.

Die beiden im Abstand von 40 cm nebeneinanderliegenden, unteren Düsen befinden sich in einer Höhe von 15 cm und die beiden gegenüberliegenden Düsen darüber in einer Höhe von 55 cm oberhalb des Konverterbodens. Diese vier Düsen bestehen jeweils aus zwei konzentrischen Rohren, wobei das innere Rohr einen lichten Durchmesser von 36 mm hat und wechselweise der Sauerstoffzufuhr oder zum Einleiten einer Koksstaub/Stickstoff-Suspension dient. Durch den Ringspalt zwischen den beiden konzentrischen Rohren mit einer Breite von 1.5 mm wird leichtes Heizöl beim Brennerbetrieb oder Propan als Düsenschutzmedium beim Einblasen von Sauerstoff geleitet.

Neben den genannten Düsen im Stahlbadbereich befindet sich eine Sauerstoffaufblasdüse von 54 mm Durchmesser im oberen Konverterkonus, dem sogenannten Konverterhut. Die Einbaulage dieser Düse ist oberhalb des Konverterdrehzapfens, 1 m unterhalb des Konverterlipprings. Die Düse ist mit ca. 60° aus der Waagerechten direkt auf das Stahlbadzentrum ausgerichtet. Die Düsenöffnung befindet sich ungefähr 3.50 m oberhalb des Badspiegels der fertigen Stahlschmelze.

In diesen Konverter chargiert man 80 t Eisen in Form fester Eisenmaterialien, hauptsächlich Schrott unterschiedlicher Qualitäten und/oder Eisenpellets, Eisenschwamm, Eisenbriketts oder vergleichbare Stoffe. Während des Chargiervorganges strömt durch die Zentralrohre und Ringspalte der Düsen im Strahlbadbereich Stickstoff, um die Düsenkanäle freizuhalten. Die Strömungsmenge beträgt 6.000 Nm³/h. Die Sauerstoffaufblasdüse im Konverterhut beschickt man aus dem gleichen Grund während der Chargierzeit ebenfalls mit Stickstoff und einer Strömungsrate von 2.000 Nm³/h.

Nach dem Chargiervorgang wird der Konverter in Blasstellung gefahren, und durch die vier Düsen im Stahlbadbereich strömen in 15 Minuten 1.100 l leichtes Heizöl durch die Ringspalte und 2.200 Nm³ Sauerstoff durch die Zentralrohre. Während dieser Zeit betreibt man alle vier Düsen als Brenner zum Schrottvorheizen. Durch die Sauerstoffaufblasdüse im Konverterhut strömen während dieser Zeit eine Menge von 2.000 Nm³/h Luft und durch den Ringspalt zum Düsenschutz 20 Nm³/h Stickstoff. Von der 15. Minute bis zur 20. Minute wird durch eine der beiden unteren Düsen im Stahlbadbereich 1.000 kg gemahlener Koks in Suspension mit 70 Nm³ Stickstoff in die sich im Konverter gebildete Schmelze eingeblasen.

Die beiden darüberliegenden Düsen betreibt man weiterhin als Brenner mit den angegebenen Öl/Sauerstoff-Blasraten. Durch die Sauerstoffaufblasdüse strömen 6.000 Nm³ pro Stunde Sauerstoff und auf diese Blasrate bezogen 1 % Stickstoff durch den Ringspalt.

Nach einer Gesamtprozeßzeit von 20 Minuten werden die bis dahin als Brenner betriebenen, beiden oberen Seitenwanddüsen im Stahlbadbereich auf die Sauerstoffzufuhr umgeschaltet. Es strömen dann 12.000 Nm³/h Sauerstoff durch die Zentralrohre dieser beiden Düsen und, bezogen auf die Sauerstoffblasrate, ca. 2 % Propan zum Düsenschutz durch die Ringspalte. Dem Sauerstoff ist gemahlener Kalk (CaO) zur Schlackenbildung aufgeladen. Die beiden unteren Düsen im Stahlbadbereich dienen dann beide zur Koksförderung ; die Förderrate beträgt 400 kg/min.

Nach einer Einschmelz- bzw. Heizzeit von 30 Minuten hat die Schmelze im Konverter ungefähr einen Kohlenstoffgehalt von 3 %, und es folgt die Frischphase von 6 Minuten. Während der Frischphase leitet man durch die Düsen im Stahlbadbereich 12.000 Nm³/h Sauerstoff mit oder ohne Kalkbeladung in das Eisenbad ein. Die Sauerstoffaufblasrate beträgt 6.000 Nm³/h und die insgesamt zugeführte Kalkmenge 4 t.

Danach wird die fertige 60 t-Stahlschmelze mit einer Temperatur von 1.640 °C und einer Zusammensetzung von 0.03 % C, 0.1 % Mn, 0.020 % P abgestochen.

Es liegt im Sinne der Erfindung, ggf. während der letzten 1 bis 2 Minuten der Frischzeit, vorzugsweise in der Nachblasperiode, die der vorangegangenen Analysenbestimmung folgt, zum Düsenschutz Inertgase, z. B. Argon, einzusetzen, um auf diese Weise sehr niedrige Stickstoff- und Wasserstoffgehalte im Stahl einzustellen.

**Patentansprüche**

1. Verfahren zur Verbesserung der Wärmeausnutzung bei der Stahlerzeugung aus festen Eisenmaterialien, wie Schrott und vorreduzierten Eisenerzen, z. B. Eisenpellets, Eisenschwamm, Eisenbriketts, in einem Konverter, der Vorrichtungen zur Sauerstoffzufuhr oberhalb und unterhalb der Badoberfläche aufweist, sowie über Brennstoffeinleitungsdüsen im Stahlbadbereich verfügt, dadurch gekennzeichnet, daß die Sauerstoff- und Brennstoffzufuhr nur durch mindestens zwei in unterschiedlichen Höhen in der Seitenwand des Konverters im Stahlbadbereich angeordnete Düsen in der Weise erfolgt, daß während der Vorheizzeit der festen Eisenmaterialien diese Düsen im Stahlbadbereich als Öl- und/oder Gas/Sauerstoff-Brenner betrieben werden, und nachdem die Schmelze die untere(n) Düse(n) erreicht hat, diese auf das Einblasen von pulverisierten, kohlenstoffhaltigen Brennstoffen und Sauerstoff umgeschaltet werden und wenn die Schmelze die obere(n) Düse(n) erreicht hat, mit den Düsen im Stahlbadbereich Sauerstoff und mindestens zeitweise kohlenstoffhaltige Brennstoffe in die Schmelze eingeleitet werden.

2. Verfahren nach Anspruch 1, dadurch gekennzeichnet, daß in Abhängigkeit von der Konvertergröße, eine oder mehrere Düsen in einer unteren Düsenebene 10 bis 40 cm und eine oder mehrere Düsen in einer darüberliegenden Düsenebene 50 bis 150 cm oberhalb des düsenfreien Konverterbodens in der feuerfesten Ausmauerung der Konverterseitenwand eingebaut werden.

3. Verfahren nach den Ansprüchen 1 und 2, dadurch gekennzeichnet, daß die Düsen im Konverterstahlbadbereich ungefähr waagerecht in der Konverterseitenwand eingebaut werden.

4. Verfahren nach einem oder mehreren der Ansprüche 1 bis 3, dadurch gekennzeichnet, daß die Düsen im Stahlbadbereich einzeln oder in Gruppen getrennt voneinander regelbar, mit Brennstoffen und/oder Sauerstoff versorgt werden.

## Claims

1. Process for improving the thermal efficiency in steel production from solid ferrous materials such as scrap iron and prereduced iron ores, e. g. iron pellets, iron sponge, iron briquettes in a converter which is equipped with means for introducing oxygen above and below the melt surface as well as with fuel injection nozzles in the zone of the steel melt, characterized in that the oxygen and fuel introduction is carried out only through at least two nozzles arranged in the converter side wall at relatively different levels in the zone of the converter occupied by the subsequently produced steel melt, said nozzles operating during the preheating phase of the solid ferrous material as oil- and/or gas/oxygen burners and after the melt has risen to the level of the lower nozzle(s), switching the latter to the introduction of powdered carbonaceous fuel and oxygen, and when the melt has risen to the level of the upper nozzle(s), introducing oxygen and, at least for some of the time carbonaceous fuel into the melt through each of said at least two nozzles.

2. Process according to claim 1, characterized in that depending on the converter size, one or more nozzles are fitted in a lower nozzle plane 10 to 40 cm and one or more nozzles are fitted in a higher plane 50 to 150 cm above the nozzlefree converter bottom in the refractory lining of the converter side wall.

3. Process according to claims 1 and 2, characterized in that the nozzles in the zone of the converter are fitted substantially horizontally in the converter side wall.

4. Process according to one or more of the claims 1 to 3, characterized in that the nozzles in the steel melt zone are supplied with fuel and/or oxygen in individually or groupwise separately regulated manner.

## Revendications

1. Procédé pour améliorer le rendement thermique de la production d'acier à partir de matières solides contenant du fer telles que des ferrailles et des minerais de fer pré-réduits, par exemple des pellets de fer, de l'éponge de fer, des briquettes de fer, dans un convertisseur qui est équipé de dispositifs pour introduire de l'oxygène au-dessus et au-dessous de la surface du bain, ainsi que de tuyères pour injecter du combustible dans la zone du bain d'acier, caractérisé par le fait que l'oxygène et le combustible sont introduits uniquement par au moins deux tuyères disposées à des hauteurs différentes dans la paroi latérale du convertisseur dans la zone du bain d'acier, que, pendant le temps de préchauffage des matières solides contenant du fer, ces tuyères sont utilisées dans la zone du bain d'acier comme des brûleurs à mazout et/ou à gaz/oxygène et, qu'après que le bain de fusion a atteint la ou les tuyères inférieures, celles-ci sont commutées pour injecter des combustibles pulvérisés contenant du carbone, ainsi que de l'oxygène, et, que quand le bain de fusion a atteint la ou les tuyères supérieures, de l'oxygène et, au moins par moments, des combustibles contenant du carbone sont injectés dans le bain de fusion par les tuyères situées dans la zone du bain d'acier.

2. Procédé selon la revendication 1, caractérisé par le fait que, en fonction de la taille du convertisseur, une ou plusieurs tuyères sont incorporées dans la maçonnerie réfractaire de la paroi latérale du convertisseur dans un plan inférieur situé de 10 à 40 cm au-dessus du fond du convertisseur non muni de tuyères et une ou plusieurs tuyères sont incorporées dans un plan supérieur situé de 50 à 150 cm au-dessus du même fond.

3. Procédé selon les revendications 1 et 2, caractérisé par le fait que les tuyères dans la zone du bain d'acier du convertisseur sont disposées à peu près horizontalement dans la paroi latérale du convertisseur.

4. Procédé selon une ou plusieurs des revendications 1 à 3, caractérisé par le fait que les tuyères disposées dans la zone du bain d'acier sont alimentées en combustibles et/ou en oxygène séparément ou en groupes avec réglage séparé.